# EUROPEAN PATENT SPECIFICATION

(11) **EP 1 862 217 B1**
(45) Date of publication and mention of the grant of the patent: **20.07.2016**
(21) Application number: 07252007.5
(22) Date of filing: 16.05.2007
(51) Int. Cl.: B01J 23/72, B01J 23/755, B01J 23/80, B01J 23/89, B01J 21/04, C01B 3/40

(54) **Use of Catalyst containing nickel and copper for removing metal carbonyl.**
Verwendung vom Katalysator enthaltend Kupfer und Nickel zur Entfernung von Metallkarbonyl.
Utilisation d'un Catalyseur contenant du cuivre et du zinc pour enlever du carbonyle de métal.

(30) Priority: 30.05.2006 JP 2006149941
(43) Date of publication of application: 05.12.2007
(73) Proprietor: Toda Kogyo Corporation, Hiroshima-ken (JP)
(72) Inventor: Kobayashi, Naoya, c/o Toda Kgyo Corporation, Ohtake-shi, Hiroshima-ken (JP); Takahashi, Shinji, c/o Toda Kgyo Corporation, Ohtake-shi, Hiroshima-ken (JP)
(74) Representative: Woods, Geoffrey Corlett

(56) References cited:
- EP-A1- 0 640 560
- EP-A2- 0 147 838
- WO-A-2004/035466
- US-A- 3 997 477

## Description

### BACKGROUND OF THE INVENTION:

The present invention relates to the use of a catalyst which is capable of safely and efficiently removing a metal carbonyl without disturbing a reforming reaction, as well as a reforming process and an "in-situ" removing process using the catalyst. EP-A-0 147 838 discloses a copper-nickel catalyst, a process for its production and its use.

It is generally known that when using a nickel-containing catalyst, nickel carbonyl is produced at a temperature of not higher than 150°C under the presence of a predetermined amount or more of carbon monoxide. The amount of the nickel carbonyl produced is substantially determined by the concentration of carbon monoxide contained in a gas and the temperature of the reaction system. For example, the amount of the nickel carbonyl produced which is calculated from chemical equilibrium near 100°C is about 3 x 10⁻³ ppm when the concentration of carbon monoxide contained in the gas is 1%. Whereas, when the concentration of carbon monoxide is 10% which is close to the amount of carbon monoxide contained in a mixed gas obtained by subjecting hydrocarbons to a steam-reforming reaction at a temperature of 600 to 700°C, the amount of the nickel carbonyl produced reaches 30 ppm.

The metal carbonyl includes, in addition to nickel carbonyl and iron carbonyl, cobalt carbonyl, tungsten carbonyl, vanadium carbonyl, molybdenum carbonyl, chromium carbonyl, etc. These metal carbonyls are regarded and handled as harmful substances. For example, as to the nickel carbonyl, it is specified that a working environment allowable maximum concentration (8 hr) thereof is 0.001 ppm, and a lethal dose concentration (30 min) thereof is 30 ppm.

Hitherto, as the method for removing the metal carbonyl, there have been studied (A) the method of reducing the amount of a carbon monoxide gas to an extreme low level; (B) the method of removing carbon monoxide and the metal carbonyl at the same time; and (C) the method of reducing the amount of the metal carbonyl only to an extreme low level (Japanese Patent Application Laid-Open (KOKAI) Nos. 62-14944(1987), 62-136239(1987), 8-281063(1996) and 2004-82034, and Japanese Translation of International Patent Application Laid-Open (TOKUHYO) No. 2002-520423).

As the above method (A) of reducing the amount of carbon monoxide to an extreme low level, there are known the method using activated carbon or inorganic porous adsorbers; the method of decomposing and removing carbon monoxide by using a catalyst formed by supporting platinum, palladium, manganese, cerium, etc., on alumina; and the method of removing carbon monoxide by adsorption/decomposition thereof by using a faujasite-type zeolite and/or a manganese dioxide/cupric oxide-based compound. In these methods, production of the metal carbonyl is suppressed by removing carbon monoxide as a raw material of the metal carbonyl.

On the other hand, as the method (B) of removing carbon monoxide and the metal carbonyl at the same time, there is known the method of decomposing and removing carbon monoxide and the metal carbonyl by using a catalyst formed by supporting palladium on manganese dioxide/cupric oxide.

As the method (C) of reducing the metal carbonyl only to an extreme low level, there is known the method of adsorbing and removing the metal carbonyl by using a Y-type zeolite. In this method, only the metal carbonyl is adsorbed and removed by selectively using the Y-type zeolite having an optimum Si/Al ratio and an optimum pore diameter.

Also, the amount of the metal carbonyl produced has been conventionally analyzed and evaluated by an atomic absorption spectrophotometer. However, with the recent demand for higher analytic accuracy at a much lower concentration range, there has been generally used a Fourier transform infrared spectrophotometer (Japanese Patent Application Laid-Open (KOKAI) Nos. 2003-26415, 2003-66019 and 2005-265116).

Conventionally, carbon monoxide and/or the metal carbonyl produced have not been subjected to "in-situ" adsorption/decomposition treatments. These products to be treated have been transported from the reaction field to other places where they are subjected to the adsorption/decomposition treatments, or circulated to a special adsorption/decomposition facility disposed in the reaction field to subject them to adsorption/decomposition treatments therein. Thus, carbon monoxide and/or the metal carbonyl have been surely removed by these conventional methods.

However, there inevitably occurs such a case where "in-situ" removal of carbon monoxide and/or the metal carbonyl is absolutely required. For example, the "in-situ" removal is required in the case where no installation place for the adsorption/decomposition facility is ensured, or in the case where the installation of such a facility tends to become disadvantageous in view of costs.

As the recent case where no installation place for the adsorption/decomposition facility is ensured, there are exemplified small-scale fuel cell co-generation systems for stationary use.

One important concept for designing the domestic fuel cell systems is a very compact size of the finished systems in view of installing the systems in a single-family house or an apartment house. Further, in order to reduce total costs for the fuel cell systems, it is required to reduce the number of auxiliary equipments or devices for the facility. Therefore, under such conditions, it is impossible to additionally install the above adsorption/decomposition facility.

In the fuel cell systems, at present, as the catalyst for reforming hydrocarbons, a catalyst made of ruthenium as a noble metal is mainly used in view of a good catalytic performance thereof. However, the noble metal catalyst requires high costs. Therefore, it has been attempted to use a nickel catalyst in place of the noble metal catalyst.

In the fuel cell systems, the hydrocarbons are subjected to a reforming reaction, thereby producing hydrogen, carbon monoxide and carbon dioxide. In the case where the nickel catalyst is used in the reforming reaction, if only the temperature condition is satisfied when the reformed gas has such a composition, nickel carbonyl tends to be produced. However, in the exiting domestic fuel cell systems, substantially no measures for inhibiting production of the nickel carbonyl are taken.

In the conventional techniques described in the above patent documents, it is not possible to inhibit production of the metal carbonyl at the "in-situ" position, or remove the metal carbonyl by adsorption/decomposition at the "in-situ" position.

Therefore, in future, there is a high possibility that the techniques for inhibiting production of the metal carbonyl at the "in-situ" position or removing the metal carbonyl by adsorption/decomposition at the "in-situ" position have a large need not only for the fuel cell systems but also in various other applications.

### SUMMARY OF THE INVENTION

The object of the present invention is to provide the use of a catalyst which is capable of removing the metal carbonyl by adsorption/decomposition at the "in-situ" position without installing any special facility for adsorption/decomposition of harmful nickel carbonyl produced in the presence of carbon monoxide when using a nickel-containing catalyst, in particular, in the application field of fuel cell systems.

As a result of the present inventors earnest study for achieving the above object, it has been found that when a specific amount of copper is allowed to exist in a nickel-containing catalyst, the metal carbonyl can be effectively removed. The present invention has been attained on the basis of the above finding.

To accomplish the aim, in a first aspect of the present invention, there is provided the use of a catalyst for removing a metal carbonyl, comprising a nickel-containing catalyst component and copper, said copper being present in an amount of 0.001 to 250% by weight in terms of metallic copper on the basis of a weight of nickel contained in the catalyst component, at a temperature of not higher than 150°C as disclosed in claim 1.

In a second aspect of the present invention, there is provided the use of the catalyst according to the above first aspect of the present invention, wherein the catalyst further contains zinc oxide, as disclosed in claim 2.

In a third aspect of the present invention, there is provided the use of the catalyst according to the above first or second aspect, wherein a clay mineral is present in an amount of 1 to 50% by weight on the basis of a weight of the catalyst, as disclosed in claim 3.

In a fourth aspect of the present invention, there is provided the use of the catalyst according to the above third aspect of the present invention, wherein at least one element having an average particle diameter of not more than 50 nm which is selected from the group consisting of ruthenium, rhodium, iridium, platinum, gold, silver, palladium, nickel, cobalt, copper, iron, zinc, vanadium and manganese is supported on the clay mineral, as disclosed in claim 4.

Other embodiments of the invention are disclosed in the wordings of dependent claims 5 and 6.

### DETAILED DESCRIPTION OF THE INVENTION

First, the catalyst for removing the metal carbonyl at the "in-situ" position without disturbing a reforming reaction according to the present invention is described.

The nickel-containing catalyst component used in the catalyst of the present invention is not particularly limited as long as the catalyst component contains nickel and is capable of subjecting hydrocarbons to a reforming reaction in the presence of steam. Examples of the nickel-containing catalyst component may include catalysts formed by supporting nickel on alumina, catalysts formed by supporting nickel on a carrier composed of magnesium, silica and alumina, catalysts formed by heat-treating a solid solution of nickel in a magnesium compound having a periclase crystal structure to thereby precipitate metallic nickel on the magnesium carrier, and catalysts formed by subjecting nickel and an element constituting a carrier to a co-precipitation reaction and then heat-treating the coprecipitated product. Meanwhile, the "reforming reaction" used herein means a steam-reforming reaction, an autothermal reforming reaction or a partial oxidation reaction.

The nickel-containing catalyst component used in the present invention preferably contains nickel in an amount of 0.5 to 50% by weight. When the content of nickel in the catalyst component is less than 0.5% by weight, the resultant reforming catalyst tends to be deteriorated in properties as required. When the content of nickel in the catalyst component is more than 50% by weight, the resultant reforming catalyst also tends to be deteriorated in properties as required, in particular, tends to suffer from coking. The content of nickel in the nickel-containing catalyst component is more preferably 1 to 45% by weight and still more preferably 2.5 to 40% by weight.

The nickel-containing catalyst component is preferably in the form of a molded product. The shape and size of the molded product are not particularly limited. The molded product of the nickel-containing catalyst component may have an ordinary shape, e.g., a beads shape such as a spherical shape and a solid cylindrical shape, or may also have such a shape as supported on a metal or ceramic honeycomb.

In the catalyst of the present invention, copper is present in an amount of 0.001 to 250% by weight in terms of metallic copper on the basis of a weight of the nickel contained in the nickel-containing catalyst component. When the content of copper in the catalyst is less than 0.001% by weight in terms of metallic copper, the resultant catalyst may fail to exhibit a sufficient capability of removing the metal carbonyl. When the content of copper in the catalyst is more than 250% by weight in terms of metallic copper, the resultant catalyst tends to be deteriorated in catalytic activity for the reforming reaction. The content of copper in the catalyst is preferably 0.001 to 200% by weight and more preferably 0.01 to 150% by weight.

Meanwhile, the copper may be present either in a metallic copper or in the form of an oxide thereof.

The copper may be incorporated into the nickel-containing catalyst component or may be mixed in a catalyst layer in the form of a catalyst or a catalyst molded product formed separately from the nickel-containing catalyst component, or the nickel-containing catalyst and the copper in the form of a catalyst molded product may be present in different divided catalyst layers, respectively.

In the case where the copper-containing molded product is provided separately from the nickel-containing catalyst component, the shape and size of the copper-containing molded product are not particularly limited. The copper-containing molded product may have, for example, a solid cylindrical shape, a spherical shape, a hollow cylindrical shape, etc., and a size of about 1 to 50 mm.

In addition, when the copper is present in the form of a honeycomb, the copper may be mixed with the nickel-containing catalyst component to form the mixture into a honeycomb shape or support the mixture on a honeycomb carrier. Alternatively, the copper may be applied to only specific portions of the honeycomb, or may be applied to an upper or lower side of a layer made of the nickel-containing catalyst component to form a upper or lower layer thereon. These methods may be optionally selected according to the requirements.

The catalyst used according to the present invention may further contain zinc oxide (second aspect of the present invention). The content of zinc oxide in the catalyst is not particularly limited. For example, the weight ratio of zinc oxide to copper contained in the catalyst is preferably 0.2 to 1.8 in terms of the metal elements. Zinc oxide is preferably contacted at its larger area with copper. By containing zinc oxide, the effect of removing the metal carbonyl can be accelerated.

In the catalyst used according to the present invention, a clay mineral may be present in an amount of 1 to 50% by weight on the basis of the weight of the catalyst (third aspect of the present invention). When the clay mineral is allowed to exist in the catalyst, the "in-situ" removal of the metal carbonyl can be further facilitated. When the content of the clay mineral in the catalyst is less than 1% by weight, the effect obtained by addition of the clay mineral tends to be insufficient. When the content of the clay mineral in the catalyst is more than 50% by weight, since the amount of the reforming catalyst per an effective volume thereof is reduced, it is required to reduce an amount of the gas flowing therethrough in order to maintain a good catalytic activity of the catalyst. As a result, it tends to be required to increase a volume of the catalyst layer used. The content of the clay mineral in the catalyst is preferably 2.5 to 45% by weight and more preferably 5 to 40% by weight on the basis of the weight of the catalyst.

Examples of the clay mineral contained in the catalyst may include zeolite, sepiolite, montmorillonite, etc. The structure of the zeolite used as the clay mineral is not particularly limited, and the zeolite preferably includes faujasite-type zeolites. Among the faujasite-type zeolites, more preferred are Y-type zeolites.

The clay mineral may be incorporated into the catalyst or may be mixed in a catalyst layer in the form of a catalyst or a catalyst molded product formed separately therefrom, or the catalyst and the clay mineral in the form of separate catalyst molded products may be present in different divided catalyst layers, respectively.

The shape and size of the clay mineral are not particularly limited. The clay mineral may have, for example, a solid cylindrical shape, a spherical shape, a hollow cylindrical shape, etc., and a size of about 1 to 5 mm.

In addition, in the case where the clay mineral is present in the form of a honeycomb separately from the catalyst, various methods may be optionally selected according to the requirements.

On the clay mineral contained in the catalyst according to the third aspect of the present invention, there may be supported at least one active metal having an average particle diameter of not more than 50 nm which is selected from the group consisting of ruthenium, rhodium, iridium, platinum, gold, silver, palladium, nickel, cobalt, copper, iron, zinc, vanadium and manganese (fourth aspect of the present invention). When the active metal is supported on the clay mineral, the effect of the "in-situ" removal of the metal carbonyl can be further facilitated.

When the average particle diameter of the active metal supported on the clay mineral, such as ruthenium, rhodium, iridium, platinum, gold, silver, palladium, nickel, cobalt, copper, iron, zinc, vanadium and manganese is more than 50 nm, the effect obtained by supporting these metals on the clay mineral tends to be insufficient. The average particle diameter of the active metal supported on the clay mineral is preferably not more than 35 nm and more preferably not more than 20 nm.

The active metal supported on the clay mineral may be in the form of either a metal element or an oxide thereof.

The amount of the active metal supported on the clay mineral varies depending upon kind of the active metal to be supported and kind of the clay mineral supporting the active metal and, therefore, is not particularly limited. For example, the amount of the active metal supported on the clay mineral is usually 0.01 to 30% by weight on the basis of the weight of clay mineral.

Examples of the practically usable raw hydrocarbons may include pure methane gas, city gas, liquefied propane gas, lamp oil, naphtha, kerosene, etc.

As the reforming method for obtaining the mixed reformed gas containing hydrogen by using the above reforming catalyst, there may be used a partial oxidation method, an autothermal steam-reforming method or a steam-reforming method. The conditions for these methods may be appropriately selected according to the systems to which these methods are applied. For example, in the partial oxidation method, the ratio of oxygen to carbon (O₂/C) may be adjusted to 0.1 to 0.8; in the autothermal steam-reforming method, the ratio of oxygen to carbon (O₂/C) may be adjusted to 0.1 to 0.8, and the ratio of steam to carbon (S/C) may be adjusted to 1.0 to 4.5; and in the steam-reforming method, the ratio of steam to carbon (S/C) may be adjusted to 1.0 to 4.5. The reaction temperature of these methods may be adjusted to 200 to 900°C.

When the catalyst used according to the present invention is placed in a carbon monoxide-containing gas at a temperature of not higher than 150°C at which production of nickel carbonyl will occur as generally reported, the metal carbonyl can be removed at the "in-situ" position. When the temperature exceeds 150°C, a stability of carbon monoxide is generally increased, so that no production of the metal carbonyl such as nickel carbonyl is caused. The concentration of carbon monoxide in the mixed reformed gas is not particularly limited, and may be, for example, not more than 30% by volume. When the production of the metal carbonyl should be more intensively inhibited owing to a higher concentration of carbon monoxide in the gas, a relative amount of copper, clay mineral or active metal-supporting clay mineral used in the catalyst may be increased.

The catalyst used according to any of the first to fourth aspects of the present invention can be used in fuel cell systems. In this case, the catalyst used according to the present invention may be disposed in a reforming reaction section or a pre-reforming reaction section of the fuel cell systems, and/or steps before or after the reforming reaction section, steps associated with the reforming reaction section, or outside of the reforming reaction section. Among these positions, the catalyst used according to the present invention is preferably disposed at the reforming reaction section or the pre-reforming reaction section of the fuel cell systems, and/or steps before or after the reforming reaction section.

The reason why the reforming catalyst used according to the present invention in which copper, clay mineral or active metal-supporting clay mineral exists, is excellent in the effect of removing the metal carbonyl at the "in-situ" position, is considered by the present inventors as follows, though not clearly determined.

That is, it is suggested by the present inventors that copper has not only the effect of adsorbing the metal carbonyl produced onto the surface thereof, but also the effect of subjecting the metal carbonyl to oxidative decomposition.

Also, when zinc oxide coexists in the catalyst, it is suggested by the present inventors that the metal carbonyl adsorbed onto zinc oxide is decomposed by the action of copper being present in the vicinity of the zinc oxide, resulting in accelerated effect of removing the metal carbonyl.

Further, when the clay mineral is mixed in the catalyst, it is suggested by the present inventors that the clay mineral exhibits the effect of adsorbing the metal carbonyl produced, or the active metal-supporting clay mineral exhibits both the effect of adsorbing the metal carbonyl produced and the effect of subjecting the thus adsorbed metal carbonyl to oxidative decomposition.

Therefore, when using the catalyst of the present invention, a sufficient effect of suppressing production of the metal carbonyl can be attained in the reaction field even under such a condition that a large amount of the metal carbonyl is produced, without deterioration of the reforming reaction for obtaining the mixed reformed gas containing hydrogen.

The reforming catalyst of the present invention for removing the metal carbonyl at the "in-situ" position without disturbing the reforming reaction, is such a catalyst capable of safely and efficiently removing the metal carbonyl. In the present invention, there are also provided a process for reforming hydrocarbons and a method for "in-situ" removal of metal carbonyl using the catalyst, as well as a method of using the catalyst in fuel cell systems.

In future, there will be a high possibility that the techniques for inhibiting production of the metal carbonyl at the "in-situ" position or removing the metal carbonyl by adsorption/decomposition at the "in-situ" position have a large need not only for the fuel cell systems but also in various other applications.

### EXAMPLES

The present invention is described in more detail below by Examples. However, the following Examples are only illustrative and not intended to limit a scope of the present invention. The measuring methods used in the present invention are as follows.

### (1) Average particle diameter of active metal supported:

Using a transmission-type electron microscope "JEM-1200EXII" manufactured by JEOL Ltd., particle diameters of particles appearing on the micrograph were measured, and an average particle diameter of the particles was calculated from the thus measured particle diameters.

### (2) Contents of Mg and active metal:

The contents of Mg and the active metal were determined by dissolving a sample in an acid and analyzing the resultant solution using a plasma emission spectral analyzer "SPS 4000" manufactured by Seiko Instruments Inc.

### (3) Evaluation of catalytic activity of catalyst:

The catalytic activity of the obtained catalyst was evaluated by using a labo-level single-tube fixed bed flowing-type reactor (volume of a reaction tube: 100 cc). As the reactor, there may be used a commercially available ordinary reactor. However, in the present invention, the catalyst was evaluated using a self-manufactured reactor. Also, the components of a reaction product obtained after the reforming reaction were analyzed by using a gas chromatograph.

### (4) Amount of metal carbonyl produced:

The amount of the metal carbonyl produced upon using the resultant catalyst was analyzed by referring to Japanese Patent Application Laid-open (KOKAI) No. 2003-66019. More specifically, a gas to be analyzed was flowed through a collection tube cooled to -150 to -190°C to collect the metal carbonyl therein. Thereafter, the collection tube was heated to 20 to 30°C, and the metal carbonyl was introduced by vacuum suction from the collection tube into an infrared absorption spectral analyzer. Upon the analysis, on the basis of the peak intensity measured at a specific wavelength for each metal carbonyl, quantitative determination of the metal carbonyl was made by a calibration curve method. For example, quantitative determination of nickel carbonyl was made by using the peak intensity at 2057 cm⁻¹. The specific peak was carefully selected so as not to overlap with peaks of other gas components and suffer from noises. Meanwhile, the following Examples and Comparative Example, the lower detection limit was 70 ppb.

### Example 1:

### <Preparation of catalyst>

600 mL of a metal-containing solution prepared by dissolving 75.3 g of Mg(NO₃)₂·6H₂O, 28.3 g of Al(NO₃)₃·9H₂O and 9.0 g of Ni(NO₃)₂·6H₂O, and 400 mL of a mixed alkali solution prepared by dissolving 58 mL of NaOH (concentration: 14 mol/L) and 9.6 g of Na₂CO₃, were prepared. The metal-containing mixed solution containing the magnesium salt, the aluminum salt and the nickel salt was added to the mixed alkali solution, and the resultant mixed solution was aged at 90°C for 5.5 hr to obtain a composite hydroxide. The thus obtained composite hydroxide was separated by filtration from the reaction solution, and then dried to obtain particles. The resultant particles were granulated into 3 mmφ, and further subjected to heat treatment and then to reducing treatment, thereby obtaining a nickel catalyst having a beads shape.

Separately, copper nitrate was sprayed over 3 mmφ alumina beads to support copper thereon in an amount of 10.6% by weight in terms of metallic copper, and the obtained product was heat-treated at 400°C for 1 hr.

The thus obtained copper-supporting alumina beads were mixed with the above nickel catalyst to prepare a catalyst containing the alumina beads in an amount of 20% by weight on the basis of the weight of the nickel catalyst. At this time, the copper-supporting alumina beads and the nickel catalyst beads were intimately mixed with each other such that the alumina beads were uniformly dispersed in the nickel catalyst beads. The amount of copper contained in the thus obtained catalyst was 20.4% by weight in terms of metallic copper on the basis of the weight of nickel contained therein.

### <Evaluation of activity of catalyst>

Using the above catalyst obtained after the mixing, the steam-reforming reaction was conducted to evaluate a catalytic activity thereof. More specifically, a pure methane gas was flowed at a GHSV of 3,000 h⁻¹ through a flow reactor filled with 10 cc of the catalyst beads to conduct a steam-reforming reaction thereof at a temperature of 500 to 700°C and a ratio of steam to carbon (S/C) of 3. As a result, it was confirmed that the reformed gases obtained at any temperature had a chemical equilibrium gas composition, and the reformed gas obtained at 700°C was a hydrogen-containing mixed gas composed of 76.7% by volume of hydrogen, 0.6% by volume of methane, 10.5% by volume of carbon dioxide and 12.2% by volume of carbon monoxide.

### <Production and analysis of metal carbonyl>

Subsequent to the above procedures, the steam-reforming reaction was conducted at 700°C for 3 hr. Thereafter, the reactor was purged with nitrogen to decrease a temperature thereof to 100°C. Next, a mixed gas having a chemical equilibrium gas composition which was obtained by conducting the steam-reforming reaction at 650°C and a ratio of steam to carbon (S/C) of 3, was flowed through a reaction tube of the reactor at a GHSV of 1,000 h⁻¹ for 30 min. Then, the reaction tube was sealed with a valve, and allowed to stand at 100°C for 1 hr. Thereafter, the reaction tube was cooled to room temperature and taken out from the reactor. After allowing the reaction tube to stand for 3 days, quantitative determination of nickel carbonyl produced during the reaction was performed. As a result, it was confirmed that the amount of the nickel carbonyl produced was less than the lower detection limit and, therefore, a sufficient effect of removing the metal carbonyl was attained.

### Example 2:

A molded product composed of a mixture containing copper oxide, zinc oxide and alumina at a weight ratio of 45:45:10 (wherein the copper content was 35.9% by weight in terms of metallic copper) was prepared in place of the copper-supporting alumina beads obtained in Example 1. Separately, a molded product of Y-type zeolite supporting palladium (Pd) in an amount of 0.5% by weight in terms of metallic Pd which had a diameter of 1 mm and a height of 2 to 3 mm, was prepared. As a result of observing the obtained molded product by an electron microscope, it was confirmed that metallic Pd supported had a size of 1.5 nm. The Pd-supporting Y-type zeolite was prepared in an amount of 15% by weight on the basis of the weight of the nickel catalyst beads. Also, the copper/zinc/alumina molded product was prepared in an amount of 3% by weight on the basis of the weight of the nickel catalyst beads, and intimately mixed with the nickel catalyst beads so as to be dispersed thereover as uniformly as possible. The Pd-supporting Y-type zeolite molded product was disposed on upper and lower sides of a catalyst layer composed of a mixture of the nickel catalyst and the copper/zinc/alumina molded product to form an upper layer and a lower layer on the catalyst layer. At this time, it was confirmed that the amount of copper contained in the resultant catalyst was 10.4% by weight in terms of metallic copper on the basis of the weight of nickel contained therein.

The above catalyst was subjected to evaluation for a catalytic activity thereof. More specifically, using 10 cc of the catalyst beads, a city gas 13A which was passed through a desulfurization catalyst to fully remove sulfur components therefrom, was subjected to a steam-reforming reaction at a GHSV of 800 h⁻¹, a temperature of 500 to 700°C and a ratio of steam to carbon (S/C) of 2.7. As a result, it was confirmed that the reformed gases obtained at any temperature had a chemical equilibrium gas composition, and the reformed gas obtained at 700°C was a hydrogen-containing mixed gas composed of 76.6% by volume of hydrogen, 0.6% by volume of methane, 10.5% by volume of carbon dioxide and 12.3% by volume of carbon monoxide.

Subsequent to the above procedures, the reactor was purged with nitrogen to decrease a temperature thereof to 400°C. Thereafter, while keeping the temperature at 400°C, the reducing treatment was conducted for 1 hr using a 10 vol% hydrogen-containing nitrogen gas. Next, after cooling the reactor to 100°C, a mixed gas having a chemical equilibrium gas composition which was obtained by conducting the steam-reforming reaction at 650°C and a ratio of steam to carbon (S/C) of 3, was flowed through a reaction tube of the reactor at a GHSV of 1,000 h⁻¹ for 1 hr. Then, the reaction tube was sealed with a valve, and allowed to stand at 100°C for 1 hr. Thereafter, the reaction tube was cooled to room temperature and taken out from the reactor. After allowing the reaction tube to stand for 3 days, quantitative determination of nickel carbonyl produced during the reaction was performed. As a result, it was confirmed that the amount of the nickel carbonyl produced was less than the lower detection limit and, therefore, a sufficient effect of removing the metal carbonyl was attained.

### Example 3:

A solution containing copper nitrate in an amount of 0.5% by weight in terms of metallic copper and a solution containing zinc chloride in an amount of 0.8% by weight in terms of zinc oxide were sprayed over 50 cc of the nickel catalyst beads obtained in Example 1 to support the respective components on the nickel catalyst beads. The resultant product was heat-treated at 500°C for 40 min to obtain a catalyst. Separately, a molded product of Y-type zeolite having a diameter of 1 mm and a height of 2 to 3 mm was prepared. The Y-type zeolite was prepared in an amount of 20% by weight on the basis of the weight of the nickel catalyst beads. At this time, the Y-type zeolite molded product was intimately mixed with the nickel catalyst such that both the components were dispersed as uniformly as possible. As a result, it was confirmed that the amount of copper contained in the resultant catalyst was 4.8% by weight in terms of metallic copper on the basis of the weight of nickel contained therein.

The above catalyst was subjected to evaluation for a catalytic activity thereof. More specifically, using 10 cc of the catalyst beads, a pure methane gas was subjected to a steam-reforming reaction at a GHSV of 1,000 h⁻¹, a temperature of 500 to 700°C and a ratio of steam to carbon (S/C) of 3. As a result, it was confirmed that the reformed gases obtained at any temperature had a chemical equilibrium gas composition, and the reformed gas obtained at 700°C was a hydrogen-containing mixed gas composed of 76.7% by volume of hydrogen, 0.5% by volume of methane, 10.6% by volume of carbon dioxide and 12.2% by volume of carbon monoxide.

Subsequent to the above procedures, the reactor was purged with nitrogen to decrease a temperature thereof to 400°C. Thereafter, while keeping the temperature at 400°C, the reducing treatment was conducted for 1 hr using a 10 vol% hydrogen-containing nitrogen gas. Next, after cooling the reactor to 100°C, a mixed gas having a chemical equilibrium gas composition which was obtained by conducting the steam-reforming reaction at 650°C and a ratio of steam to carbon (S/C) of 3, was flowed through a reaction tube of the reactor at a GHSV of 1,000 h⁻¹ for 1 hr. Then, the reaction tube was sealed with a valve, and allowed to stand at 100°C for 1 hr. Thereafter, the reaction tube was cooled to room temperature and taken out from the reactor. After allowing the reaction tube to stand for 3 days, quantitative determination of nickel carbonyl produced during the reaction was performed. As a result, it was confirmed that the amount of the nickel carbonyl produced was 21 ppm and, therefore, a sufficient effect of removing the metal carbonyl was attained.

### Example 4:

A mixed solution having a total volume of 50 mL which was obtained by dissolving 33.7 g of nickel nitrate and 18.2 g of magnesium nitrate was impregnated into 12 g of 3 mmφ alumina beads. The thus obtained impregnated alumina beads were dried at 60°C and then heat-treated at 450°C for 6 hr. Thereafter, the obtained product was subjected to a reducing treatment using a 10 vol% hydrogen-containing nitrogen gas at 500°C for 6 hr, thereby obtaining a nickel catalyst (having a beads shape). Also, a molded product composed of a mixture containing copper oxide, zinc oxide and alumina at a weight ratio of 45:45:10 (wherein the copper content was 35.9% by weight in terms of metallic copper) was prepared in an amount of 0.2% by weight on the basis of the weight of the nickel catalyst beads. Separately, a molded product of Y-type zeolite having a diameter of 1 mm and a height of 2 to 3 mm was prepared. The Y-type zeolite was prepared in an amount of 8% by weight on the basis of the weight of the nickel catalyst beads. The nickel catalyst beads, the copper/zinc/alumina molded product and the Y-type zeolite molded product were intimately mixed with each other such that these components were dispersed as uniformly as possible. As a result, it was confirmed that the amount of copper contained in the resultant catalyst was 0.23% by weight in terms of metallic copper on the basis of the weight of nickel contained therein.

The above catalyst was subjected to evaluation for a catalytic activity thereof. More specifically, using 10 cc of the catalyst beads, a pure methane gas was subjected to a steam-reforming reaction at a GHSV of 1,000 h⁻¹, a temperature of 500 to 700°C and a ratio of steam to carbon (S/C) of 3.3. As a result, it was confirmed that the reformed gases obtained at any temperature had a chemical equilibrium gas composition, and the reformed gas obtained at 700°C was a hydrogen-containing mixed gas composed of 76.7% by volume of hydrogen, 0.6% by volume of methane, 10.5% by volume of carbon dioxide and 12.2% by volume of carbon monoxide.

Subsequent to the above procedures, the reactor was purged with nitrogen to decrease a temperature thereof to 400°C. Thereafter, while keeping the temperature at 400°C, the reducing treatment was conducted for 1 hr using a 10 vol% hydrogen-containing nitrogen gas. Next, after cooling the reactor to 100°C, a mixed gas having a chemical equilibrium gas composition which was obtained by conducting the steam-reforming reaction at 650°C and a ratio of steam to carbon (S/C) of 3, was flowed through a reaction tube of the reactor at a GHSV of 1,000 h⁻¹ for 1 hr. Then, the reaction tube was sealed with a valve, and allowed to stand at 100°C for 1 hr. Thereafter, the reaction tube was cooled to room temperature and taken out from the reactor. After allowing the reaction tube to stand for 3 days, quantitative determination of nickel carbonyl produced during the reaction was performed. As a result, it was confirmed that the amount of the nickel carbonyl produced was 42 ppm and, therefore, a sufficient effect of removing the metal carbonyl was attained.

### Example 5:

A molded product composed of a mixture containing copper oxide, zinc oxide and alumina at a weight ratio of 45:45:10 (wherein the copper content was 35.9% by weight in terms of metallic copper) was prepared in an amount of 30% by weight on the basis of the weight of the nickel catalyst beads obtained in Example 4. The copper/zinc/alumina molded product was intimately mixed with the nickel catalyst beads such that both the components were dispersed as uniformly as possible. At this time, it was confirmed that the amount of copper contained in the resultant catalyst was 34.3% by weight in terms of metallic copper on the basis of the weight of nickel contained therein.

The above catalyst was subjected to evaluation for a catalytic activity thereof. More specifically, using 10 cc of the catalyst beads, a pure methane gas was subjected to a steam-reforming reaction at a GHSV of 850 h⁻¹, a temperature of 500 to 700°C and a ratio of steam to carbon (S/C) of 3.3. As a result, it was confirmed that the reformed gases obtained at any temperature had a chemical equilibrium gas composition, and the reformed gas obtained at 700°C was a hydrogen-containing mixed gas composed of 76.7% by volume of hydrogen, 0.6% by volume of methane, 10.5% by volume of carbon dioxide and 12.2% by volume of carbon monoxide.

Subsequent to the above procedures, the reactor was purged with nitrogen to decrease a temperature thereof to 400°C. Thereafter, while keeping the temperature at 400°C, the reducing treatment was conducted for 1 hr using a 10 vol% hydrogen-containing nitrogen gas. Next, after cooling the reactor to 100°C, a mixed gas having a chemical equilibrium gas composition which was obtained by conducting the steam-reforming reaction at 650°C and a ratio of steam to carbon (S/C) of 3, was flowed through a reaction tube of the reactor at a GHSV of 1,000 h⁻¹ for 1 hr. Then, the reaction tube was sealed with a valve, and allowed to stand at 100°C for 1 hr. Thereafter, the reaction tube was cooled to room temperature and taken out from the reactor. After allowing the reaction tube to stand for 3 days, quantitative determination of nickel carbonyl produced during the reaction was performed. As a result, it was confirmed that the amount of the nickel carbonyl produced was less than the lower detection limit and, therefore, a sufficient effect of removing the metal carbonyl was attained.

### Example 6:

An aqueous solution containing 0.77 g of Ni(NO₃)₂·6H₂O was impregnated into 20 g of alumina beads. The thus obtained impregnated alumina beads were dried and then heat-treated at 450°C for 1 hr. Thereafter, 1.96 mL of a solution containing ruthenium nitrate in an amount of 51 g/L in terms of metallic ruthenium was further impregnated into the alumina beads. The thus obtained impregnated alumina beads were dried and then heat-treated in a nitrogen atmosphere at 200°C for 0.5 hr. Separately, a molded product composed of a mixture containing copper oxide, zinc oxide and alumina at a weight ratio of 45:45:10 (wherein the copper content was 35.9% by weight in terms of metallic copper) was prepared in an amount of 30% by weight on the basis of the weight of the ruthenium and nickel-supporting alumina catalyst beads. The ruthenium and nickel-supporting alumina catalyst beads were intimately mixed with the copper/zinc/alumina molded product such that both the components were dispersed as uniformly as possible. At this time, it was confirmed that the amount of copper contained in the resultant catalyst was 200% by weight in terms of metallic copper on the basis of the weight of nickel contained therein.

The above catalyst was subjected to evaluation for a catalytic activity thereof. More specifically, using 10 cc of the catalyst beads, a pure methane gas was subjected to a steam-reforming reaction at a GHSV of 750 h⁻¹, a temperature of 500 to 700°C and a ratio of steam to carbon (S/C) of 3.0. As a result, it was confirmed that the reformed gases obtained at any temperature had a chemical equilibrium gas composition, and the reformed gas obtained at 700°C was a hydrogen-containing mixed gas composed of 76.8% by volume of hydrogen, 0.6% by volume of methane, 10.5% by volume of carbon dioxide and 12.1% by volume of carbon monoxide.

Subsequent to the above procedures, the reactor was purged with nitrogen to decrease a temperature thereof to 400°C. Thereafter, while keeping the temperature at 400°C, the reducing treatment was conducted for 1 hr using a 10 vol% hydrogen-containing nitrogen gas. Next, after cooling the reactor to 100°C, a mixed gas having a chemical equilibrium gas composition which was obtained by conducting the steam-reforming reaction at 650°C and a ratio of steam to carbon (S/C) of 3, was flowed through a reaction tube of the reactor at a GHSV of 1,000 h⁻¹ for 1 hr. Then, the reaction tube was sealed with a valve, and allowed to stand at 100°C for 1 hr. Thereafter, the reaction tube was cooled to room temperature and taken out from the reactor. After allowing the reaction tube to stand for 3 days, quantitative determination of nickel carbonyl produced during the reaction was performed. As a result, it was confirmed that the amount of the nickel carbonyl produced was less than the lower detection limit and, therefore, a sufficient effect of removing the metal carbonyl was attained.

### Comparative Example 1:

The nickel and magnesium-supporting alumina beads obtained in Example 4 were subjected to evaluation for a catalytic activity thereof. More specifically, using 10 cc of the catalyst beads, a pure methane gas was subjected to a steam-reforming reaction at a GHSV of 1,000 h⁻¹, a temperature of 500 to 700°C and a ratio of steam to carbon (S/C) of 3.3. As a result, it was confirmed that the reformed gases obtained at any temperature had a chemical equilibrium gas composition, and the reformed gas obtained at 700°C was a hydrogen-containing mixed gas composed of 76.7% by volume of hydrogen, 0.6% by volume of methane, 10.5% by volume of carbon dioxide and 12.2% by volume of carbon monoxide.

Subsequent to the above procedures, the reactor was purged with nitrogen to decrease a temperature thereof to 400°C. Thereafter, while keeping the temperature at 400°C, the reducing treatment was conducted for 1 hr using a 10 vol% hydrogen-containing nitrogen gas. Next, after cooling the reactor to 100°C, a mixed gas having a chemical equilibrium gas composition which was obtained by conducting the steam-reforming reaction at 650°C and a ratio of steam to carbon (S/C) of 3, was flowed through a reaction tube of the reactor at a GHSV of 1,000 h⁻¹ for 1 hr. Then, the reaction tube was sealed with a valve, and allowed to stand at 100°C for 1 hr. Thereafter, the reaction tube was cooled to room temperature and taken out from the reactor. After allowing the reaction tube to stand for 3 days, quantitative determination of nickel carbonyl produced during the reaction was performed. As a result, it was confirmed that the amount of the nickel carbonyl produced was more than 100 ppm which was the upper detection limit.

Although the present invention is described above with respect to embodiments which are considered to be most practical and preferable at the present time, the present invention is not limited to these embodiments, and various changes and modifications will be appropriately made within the scope of claims and a whole of a specification of this application unless departing from the subject matter and concept of the present invention, and it should be construed that these changes and modifications are involved in technical range of the present invention.

## Claims

1. Use of copper in a catalyst comprising a nickel-containing catalyst component and copper,
said copper being present in an amount of 0.001 to 250% by weight in terms of metallic copper on the basis of the weight of the nickel contained in the catalyst component, for removing a metal carbonyl in the production of a mixed reformed gas containing hydrogen, wherein the catalyst is used in a carbon-monoxide containing gas at a temperature of not higher than 150°C.

2. Use according to claim 1, wherein the catalyst further comprises zinc oxide.

3. Use according to either claim 1 or claim 2, wherein the catalyst comprises a clay mineral in an amount of 1 to 50% by weight on the basis of the weight of the catalyst.

4. Use according to claim 3, wherein at least one element having an average particle diameter of not more than 50 nm selected from ruthenium, rhodium, iridium, platinum, gold, silver, palladium, nickel, cobalt, copper, iron, zinc, vanadium and manganese is supported on the clay mineral.

5. Use according to any one of the preceding claims in subjecting hydrocarbons to a reforming reaction in the presence of steam.

6. Use according to any one of the preceding claims, wherein the metal carbonyl is nickel carbonyl.

## Patentansprüche

1. Verwendung von Kupfer in einem Katalysator, der eine nickelhaltige Katalysatorkomponente und Kupfer umfasst,
worin das Kupfer in einer Menge von 0,001 bis 250 Gew.% vorliegt, ausgedrückt als metallisches Kupfer auf der Basis des Gewichts von Nickel, das in der Katalysatorkomponente enthalten ist, zum Entfernen eines Metallcarbonyls in der Herstellung eines gemischten reformierten Gases, das Wasserstoff enthält, worin der Katalysator in einem Kohlenmonoxid-haltigen Gas bei einer Temperatur von nicht höher als 150°C verwendet wird.

2. Verwendung gemäß Anspruch 1, worin der Katalysator ferner Zinkoxid umfasst.

3. Verwendung gemäß entweder Anspruch 1 oder Anspruch 2, worin der Katalysator ein Tonmineral in einer Menge von 1 bis 50 Gew.% umfasst, bezogen auf das Gewicht des Katalysators.

4. Verwendung gemäß Anspruch 3, worin mindestens ein Element mit einem mittleren Partikeldurchmesser von nicht größer als 50 nm, das ausgewählt ist aus Ruthenium, Rhodium, Iridium, Platin, Gold, Silber, Palladium, Nickel, Kobalt, Kupfer, Eisen, Zink, Vanadium und Mangan, auf dem Tonmineral geträgert ist.

5. Verwendung gemäß irgendeinem der vorhergehenden Ansprüche beim Unterziehen von Kohlenwasserstoffen unter eine Reformierungsreaktion in der Gegenwart von Dampf.

6. Verwendung gemäß irgendeinem der vorhergehenden Ansprüche, worin das Metallcarbonyl Nickelcarbonyl ist.

## Revendications

1. Utilisation de cuivre dans un catalyseur comprenant un composant de catalyseur contenant du nickel et du cuivre,
ledit cuivre étant présent en une quantité de 0,001 à 250 % en poids en termes de cuivre métallique sur la base du poids du nickel contenu dans le composant de catalyseur, pour enlever un carbonyle de métal dans la production d'un gaz reformé mixte contenant de l'hydrogène, le catalyseur étant utilisé dans un gaz contenant du monoxyde de carbone à une température non supérieure à 150 °C.

2. Utilisation selon la revendication 1, dans laquelle le catalyseur comprend en outre de l'oxyde de zinc.

3. Utilisation selon la revendication 1 ou la revendication 2, dans laquelle le catalyseur comprend un minéral argileux en une quantité de 1 à 50 % en poids sur la base du poids du catalyseur.

4. Utilisation selon la revendication 3, dans laquelle au moins un élément ayant un diamètre moyen des particules non supérieur à 50 nm choisi parmi le ruthénium, le rhodium, l'iridium, le platine, l'or, l'argent, le palladium, le nickel, le cobalt, le cuivre, le fer, le zinc, le vanadium et le manganèse est supporté sur le minéral argileux.

5. Utilisation selon l'une quelconque des revendications précédentes dans l'opération consistant à soumettre des hydrocarbures à une réaction de reformage en présence de vapeur.

6. Utilisation selon l'une quelconque des revendications précédentes, dans laquelle le carbonyle de métal est le carbonyle de nickel.
